## Europäisches Patentamt

(19) **European Patent Office**

**Office européen des brevets**

(11) Veröffentlichungsnummer: **0 101 558**
**B1**

(12) **EUROPÄISCHE PATENTSCHRIFT**

(45) Veröffentlichungstag der Patentschrift:
22.06.88

(51) Int. Cl.⁴: **G 01 B 5/00**

(21) Anmeldenummer: 83106949.7

(22) Anmeldetag: **15.07.83**

(54) Mehrkoordinaten-Tastkopf.

(30) Priorität: 21.08.82 DE 3231158

(43) Veröffentlichungstag der Anmeldung:
29.02.84 Patentblatt 84/9

(45) Bekanntmachung des Hinweises auf die Patenterteilung:
22.06.88 Patentblatt 88/25

(84) Benannte Vertragsstaaten:
AT CH DE FR GB IT LI NL SE

(56) Entgegenhaltungen:
DE - A - 1 548 326
DE - C - 506 115

(73) Patentinhaber: **Dr. Johannes Heidenhain GmbH,
Nansenstrasse 17, D-8225 Traunreut (DE)**

(72) Erfinder: **Ernst, Alfons, Dipl.-Ing., Traunring 62,
D-8225 Traunreut (DE)**

ACTORUM AG

## Beschreibung

Die Erfindung bezieht sich auf einen Mehrkoordinaten-Tastkopf gemäss dem Oberbegriff des Anspruches 1.

Aus einer Vielzahl von Druckschriften sind Mehrkoordinaten-Tastköpfe der unterschiedlichsten Bauarten bekannt.

So ist aus der DE-C-22 42 355 ein elektronischer Mehrkoordinatentaster bekannt, dessen Taststift an einem räumlichen Geradführungssystem angeordnet ist und über Signalgeber verfügt, die bei Auslenkung des Taststiftes ein Signal abgeben.

Aus der DE-C-506 115 ist ein gelenkiger Kopierstift bekannt, bei dem die Tastspitze in einem Führungsteil axial verschieblich ist. Bei axialer Antastung oder im Falle einer Haverie in axialer Richtung kann die Tastspitze in das Führungsteil eintauchen.

Ferner ist aus der DE-A-15 48 326 eine Null-Tasteinrichtung für Werkzeugmaschinen bekannt, bei der eine Überlastsicherung vorgesehen ist, die beim Überlastungsfall eine Trennung von Halterung und Messgerät ermöglicht.

Die hier nur beispielhaft aus der grossen Anzahl der relevanten Druckschriften herausgegriffenen Lösungen sind mit Mängeln behaftet, wenn Mehrkoordinaten-Taster nicht nur an Messmaschinen, sondern in zunehmendem Masse an numerisch gesteuerten Bearbeitungsmaschinen wie Bearbeitungszentren eingesetzt werden. Der im Gegensatz zu den Verhältnissen im Messraum recht rauhe Werkstattbetrieb und die weitgehend automatischen Fertigungsabläufe erfordern neuartige Messeinrichtungen, die nicht ohne weiteres mit den bekannten Lösungen geschaffen werden können.

Der Erfindung liegt daher die Aufgabe zugrunde, einen Mehrkoordinaten-Tastkopf zu schaffen, der die bekannten Nachteile nicht aufweist, der also den rauhen Anforderungen des Einsatzes in Werkstätten ebenso Rechnung trägt wie dem Einsatz bei automatisch gesteuerten Fertigungsabläufen und dem Einsatz bei Mehrkoordinaten-Messmaschinen. Der Mehrkoordinaten-Tastkopf sollte also ein genau reproduzierbares Antastsignal liefern, robust sein und Sicherheit bei fehlerhaften Messabläufen bieten, ohne dass der Messkopf zerstört wird.

Diese Aufgabe wird von einem Mehrkoordinaten-Tastkopf gelöst, der durch die Merkmale des Anspruches 1 gekennzeichnet ist.

Weitere Ausgestaltungen der Erfindung sind in den Unteransprüchen angegeben.

Die besonderen Vorteile des erfindungsgemässen Tastkopfes liegen in der Sicherheit gegenüber unzulässiger Taststiftauslenkung, in der guten Reproduzierbarkeit des Taststiftauslenkungssignales, in der geringen Baugrösse und dem verhältnismässig einfachen Aufbau.

Anhand der Zeichnungen sollen Ausführungsbeispiele der Erfindung noch näher erläutert werden.

Es zeigen:

Figur 1 eine Schnittdarstellung eines Tastkopfes in Arbeitsstellung,

Figur 2 eine Schnittdarstellung eines Tastkopfes bei axialer Taststiftauslenkung,

Figur 3 eine Schnittdarstellung eines Tastkopfes bei radialer Taststiftauslenkung,

Figur 4 eine Variante von Figur 3.

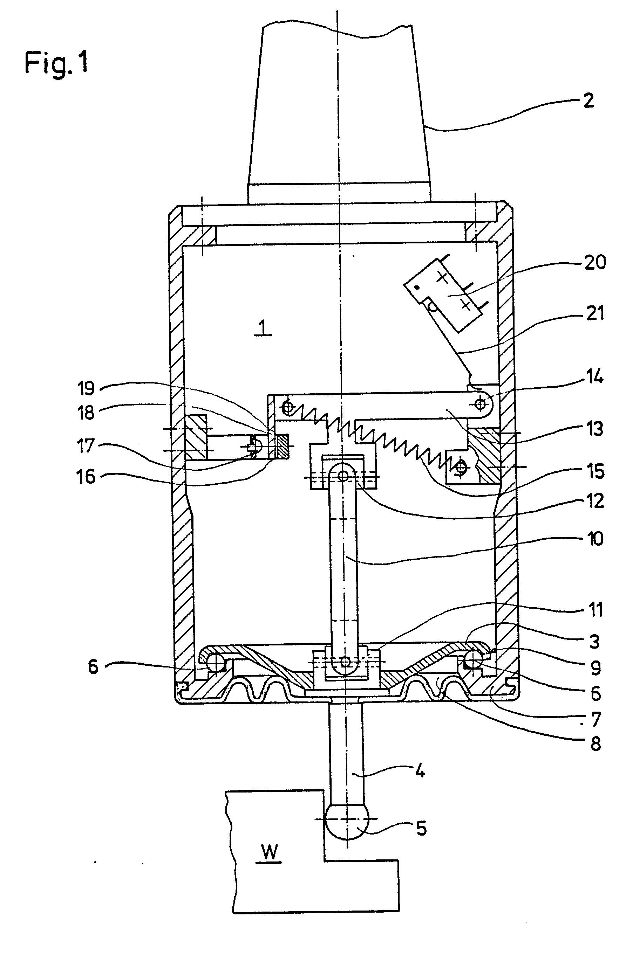

Ein in Figur 1 gezeigter Tastkopf in seiner Grund-Arbeitsstellung weist ein Tastkopfgehäuse 1 auf, das mittels eines Einspannzapfens 2 in die Spindel einer nicht dargestellten Mess- oder Bearbeitungsmaschine eingesetzt werden kann. Ist diese Maschine ein numerisch gesteuertes Bearbeitungszentrum, so kann der Tastkopf im Werkzeugmagazin deponiert sein und automatisch zu Messzwecken entnommen und in die Spindel eingesetzt werden. Im Innern des Tastkopfgehäuses 1 ist eine im wesentlichen runde Platte 3 angeordnet, die am inneren Ende eines Taststiftes 4 befestigt ist, der an seinem freien Ende eine Antastkugel 5 trägt. Die Platte 3 hat eine genau definierte Lage zu einem Ring von Kugeln 6, die am Boden 7 des Tastkopfgehäuses 1 – gleichmässig über den Umfang einer Taststiftdurchtrittsöffnung 8 verteilt – eingekittet sind. Der Ring von Kugeln 6 bildet eine präzise Auflage für die Platte 3, die zu diesem Zweck (zur Auflage auf dem Ring von Kugeln 6) eine rotationssymmetrische Ausnehmung 9 aufweist, die eine ebene und eine gekrümmte, z.B. konische Fläche, oder zwei konische Flächen bildet, mit deren Hilfe die im noch weichen Kitt eingebetteten Kugeln 6 in eine genaue Position bezüglich Höhe und Durchmesser des Ringes von Kugeln 6 gedrückt und dort bis zur Erhärtung des Kittes gehalten werden. Damit wird für die Platte 3 eine äusserst präzise Auflage geschaffen, die preisgünstig ist, und die mit dieser Präzision durch spanende Bearbeitung des Bodens 7 kaum zu erzielen wäre.

Eine nicht näher bezeichnete Verdrehsicherung sorgt dafür, dass die Platte 3 mit dem Taststift 4 nach Auslenkungen immer wieder in die Ausgangsposition zurückkehrt. Durch die exakte Lage der Platte 3 zu dem Ring von Kugeln 6 ist auch die Nullage der Antastkugel 5 immer exakt dieselbe (innerhalb der geforderten Toleranzen selbstverständlich).

Der Taststift 4 ist über ein Gelenkgetriebe mit dem Tastkopfgehäuse 1 verbunden. Der Taststift 4 stellt dabei das Eingangsgetriebeglied dar, das mit Hilfe des Gelenkes 11 kardanisch mit einem Zwischenglied 10 verbunden ist. Das Zwischenglied 10 weist am anderen Ende ein weiteres kardanisches Gelenk 12 auf, mit dem es an einem Schwenkhebel 13 angebracht ist. Der Schwenkhebel 13 bildet das Ausgangsglied des Gelenkgetriebes und ist mittels eines ebenen Gelenkes 14 am Tastkopfgehäuse 1 angelenkt.

Mit einer Feder 15, die am Schwenkhebel 13 angreift, wird der Taststift 4 in seiner Nullage gehalten, aus der er gegen die Rückstellkraft der Feder 15 in beliebiger Richtung auslenkbar ist. Eine lichtelektrische Baueinheit 16 am freien Ende des Schwenkhebels 13 dient zur Erzeugung eines Taststiftauslenksignales, wenn der Taststift 4 in eine beliebige Richtung ausgelenkt worden ist.

Üblicherweise liegt der Arbeitsbereich eines derartigen Tastkopfes innerhalb von 1 bis 2 Millimetern das bedeutet, dass im allgemeinen die Erzeugung eines Taststiftauslenksignales spätestens nach einer Auslenkung um 10 Mikrometer (10 μm) sicher abgeschlossen ist, um die erforderliche Reproduzierbarkeit bei den Messungen sicherzustellen.

Die Taststiftauslenkung erfolgt im allgemeinen dadurch, dass ein Werkstück W mit dem Taststift 4 in Kontakt gebracht wird. Das Taststiftauslenksignal dient dann der Fixierung des Messwertes bei Kontakt zwischen Taststift 4 und Werkstück W und kann zum Stoppen der relativ zueinander beweglichen Maschinenbauteile von der numerischen Steuerung ausgewertet werden. Es ist ersichtlich, dass bei dem vorbeschriebenen Arbeitsbereich von nur wenigen Millimeter das Stoppen der Maschinenbauteile problematisch wird. Daher haben die meisten bekannten Tastköpfe einen gewissen Überhub von etwa 5 mm, so dass in diesem Auslenkungsbereich des Taststiftes 4 dieser noch nicht beschädigt wird.

Bei Störungen, die steuerungs- oder antriebsbedingt sind, reicht dieser Überhub unter Umständen nicht aus und es kommt zu Beschädigungen des Tastkopfes. Aus diesen Gründen gibt es auch noch Überlastsicherungen, die den Tastkopf ausklinken, wenn die Auslenkung des Taststiftes zu gross wird. Wie bereits eingangs erwähnt, sind die bekannten Lösungen mit Nachteilen behaftet.

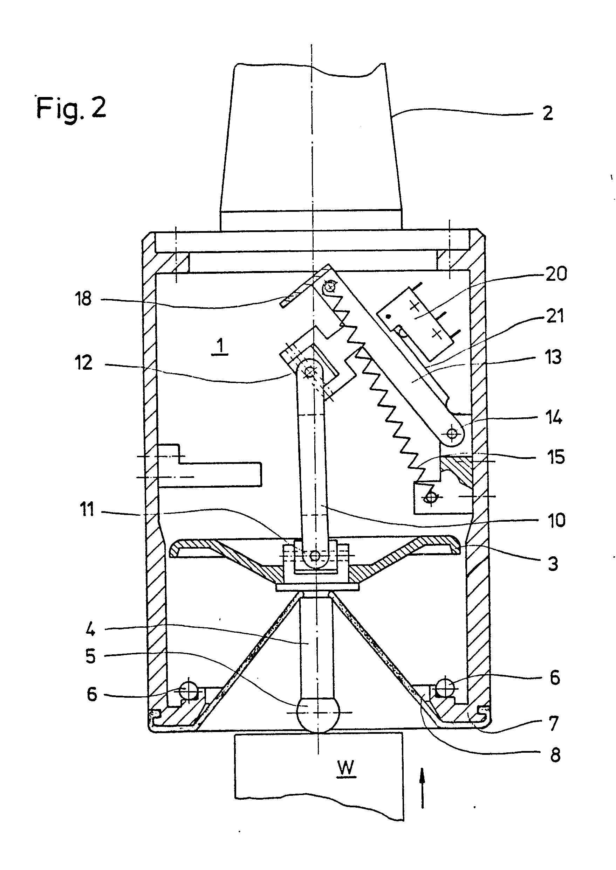

Hier stellt die Aufhängung des Taststiftes 4 ein Novum dar, denn bei unsachgemässer Auslenkung des Taststiftes 4 ist dieser vollständig im Tastkopfgehäuse 1 versenkbar, wie aus den Figuren 2, 3 und 4 ersichtlich ist. Dabei ist es gleichgültig, von welcher Richtung aus das Werkstück W den Taststift 4 kontaktiert. Das Gelenkgetriebe bzw. der Taststift 4 wandert entsprechend der Antastbewegung aus und schwenkt den Schwenkhebel 13 in einer Ebene um die Achse des Gelenkes 14. Das Zwischenglied 10 nimmt dabei eine Lage ein, die durch die Auslenkung des Taststiftes 4 und die Schwenkung des Schwenkhebels 13 bestimmt ist. Die Rückstellkraft einer Feder 15 wirkt der Auslenkung entgegen.

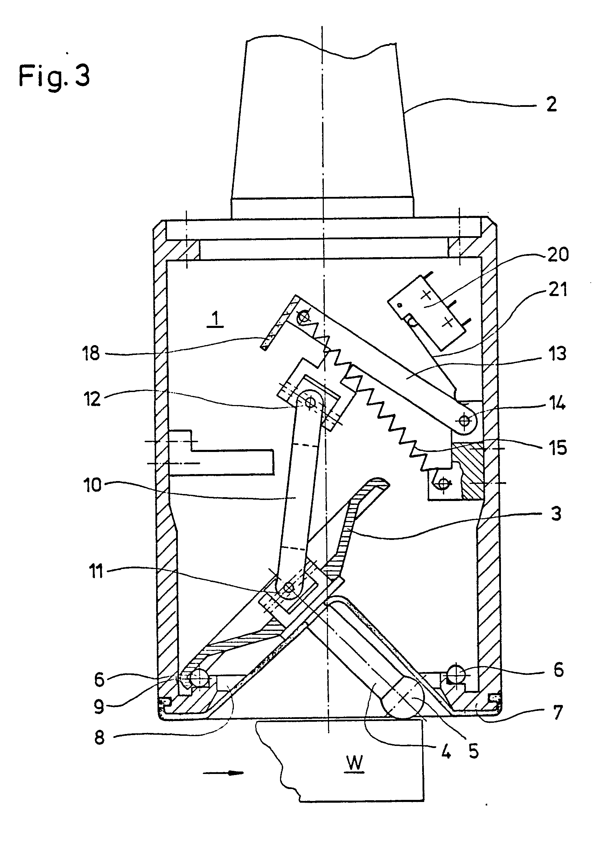

Die lichtelektrische Baueinheit 16 erzeugt ein Signal, sobald sich der Schwenkhebel 13 geringfügig aus seiner Ruhelage heraus bewegt, was durch den geringsten Kontakt zwischen Werkstück W und Taststift 4 bewirkt wird. Beim radialen Auslenken des Taststiftes 4 kippt dieser über wenigstens eine der Kugeln 6, wie aus Figur 3 ersichtlich ist.

Da ein Auslenken aus dem Arbeitsbereich heraus (ca. 5 mm) immer auf eine Störung hindeutet, kann in vorteilhafter Weise eine Alarmvorrichtung 20 vorgesehen sein. Diese kann aus einem Mikroschalter 20 mit einem langen Auslösehebel 21 bestehen, der am Schwenkhebel 13 angreift und der den Mikroschalter 20 auslöst, sobald eine voreinstellbare Schwenkung des Schwenkhebels 13 erreicht ist. Eine weitere Auslenkung des Schwenkhebels 13 ist ohne Bedeutung auf das Schaltverhalten des Mikroschalters 20. Das von der Alarmvorrichtung 20 ausgegebene Alarmsignal kann optisch und/oder akustisch sein oder auch ein sofortiges «Not-Aus» für die Maschine bewirken. Ein manueller Eingriff in den Arbeitsablauf ist in jedem Fall nach einem Alarm erforderlich.

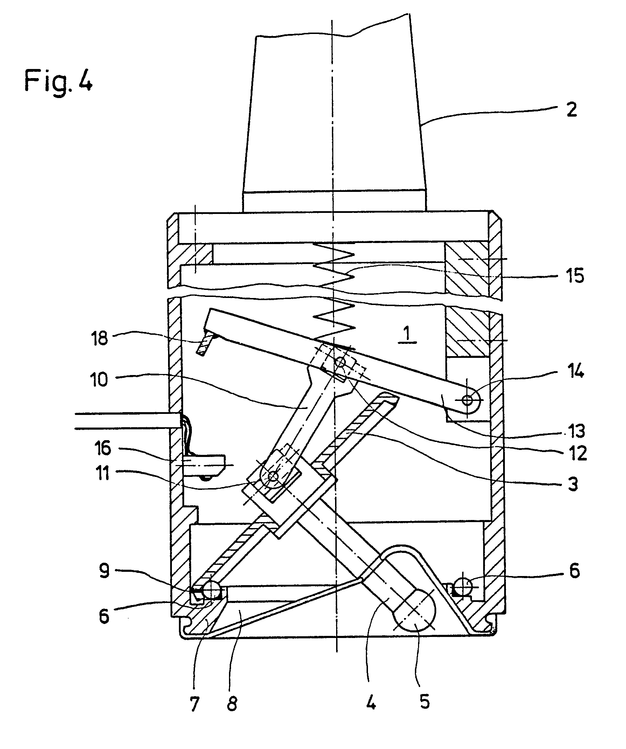

Dieser manuelle Eingriff nach einer Störsituation lässt auch eine weitere Ausgestaltung des Tastkopfes zu: Wenn nach einem Störfall ein manueller Eingriff – in den im übrigen automatischen Ablauf – notwendig ist, kann der Tastkopf so konzipiert werden, dass eine Vorrichtung vorgesehen wird, mit deren Hilfe der Taststift 4 – bei einer Auslenkung über den Arbeitsbereich hinaus – ins Innere des Tastkopfgehäuses 1 geschnappt wird. Das Gelenkgetriebe 4, 10, 11, 12, 13, 14 und die Feder 15 können dabei so angeordnet sein, dass sich nach dem Einschnappen des Taststiftes 4 ins Innere des Tastkopfgehäuses 1 eine Arretierung des Taststiftes 4 im Innern des Tastkopfgehäuses 1 ergibt. Die Arretierung kann dabei durch die Resultierende der Kraftkomponenten der Feder 15 erfolgen (Fig. 4), aber es ist auch eine mechanische oder elektromechanische Arretierung, beispielsweise mit einem ansteuerbaren Sperrhebel möglich. Bei dem manuellen Eingriff kann dann die Verriegelung wieder gelöst werden.

Die Vorteile der Erfindung lassen sich auch beim Transport und bei der Lagerung des Tastkopfes nutzbar machen, da auch in diesen Fällen der Taststift 4 ins Innere des Tastkopfgehäuses 1 versenkt werden kann. Die Taststiftdurchtrittsöffnung 8 kann in vorteilhafter Weise dann mit einer Kappe verschlossen werden.

Es liegt im Rahmen der Erfindung, den Taststift 4 in anderer Weise zu lagern, oder das Gelenkgetriebe anders zu gestalten. Die Baueinheit 16 zur Erzeugung des Taststiftauslenksignals kann ebenso induktiv, kapazitiv oder magnetisch arbeiten.

**Patentansprüche**

1. Havariegeschützter Mehrkoordinaten-Tastkopf mit einem Tastkopfgehäuse, einem im Tastkopfgehäuse gelagerten, nach mehreren Richtungen auslenkbaren, in seiner Ruhestellung eine definierte Nullage einnehmenden Taststift sowie mit einer Baueinheit zur Erzeugung eines Taststiftauslenksignales, dadurch gekennzeichnet, dass das Tastkopfgehäuse (1) einen genügend grossen Hohlraum zur Aufnahme des Taststiftes (4) aufweist, dass der Taststift (4) mittels eines räumlichen Gelenkgetriebes (4, 10, 11, 12, 13, 14) im Innern des Tastkopfgehäuses (1) derart angelenkt ist, dass der Taststift (4) bei extremer Auslenkung in den Hohlraum des Tastkopfgehäuses (1) gedrückt wird.

2. Havariegeschützter Mehrkoordinaten-Tastkopf nach Anspruch 1, dadurch gekennzeichnet, dass als Gelenkgetriebe (4, 10, 11, 12, 13, 14) wenigstens zwei räumliche Gelenke (11, 12) und ein ebenes Gelenk (14) vorgesehen sind, die die Getriebeglieder (4, 10, 13) miteinander verbinden.

3. Havariegeschützter Mehrkoordinaten-Tastkopf nach Anspruch 1 oder 2, dadurch gekennzeichnet, dass zwischen einem Eingangsgetriebeglied (4) und einem Ausgangsgetriebeglied (13) ein Zwischenglied (10) mit kardanischen Gelenken (11, 12) an beiden Enden angeordnet ist.

4. Havariegeschützter Mehrkoordinaten-Tastkopf nach Anspruch 1 bis 3, dadurch gekennzeichnet, dass das Eingangsgetriebeglied (4) ein Taststift und das Ausgangsgetriebeglied (13) ein Schwenkhebel ist.

5. Havariegeschützter Mehrkoordinaten-Tastkopf nach Anspruch 1 bis 4, dadurch gekennzeichnet, dass das Tastkopfgehäuse (1) eine Vorrichtung aufweist, die den Taststift (4) – bei Auslenkung über den Arbeitsbereich hinaus – in den Hohlraum des Tastkopfgehäuses (1) schnappen lässt.

6. Havariegeschützter Mehrkoordinaten-Tastkopf nach Anspruch 1, dadurch gekennzeichnet, dass der Taststift (4) im Hohlraum des Tastkopfgehäuses (1) arretierbar ist.

7. Havariegeschützter Mehrkoordinaten-Tastkopf nach Anspruch 1, dadurch gekennzeichnet, dass der Taststift (4) im Innern des Tastkopfgehäuses (1) eine im wesentlichen runde Platte (3) aufweist, und dass durch die Lage der Platte (3) zu einem Ring von Kugeln (6) am Boden (7) des Tastkopfgehäuses (1) die definierte Nullage der Antastkugel (5) im Gebrauch bestimmt ist.

8. Havariegeschützter Mehrkoordinaten-Tastkopf nach Anspruch 7, dadurch gekennzeichnet, dass die Platte (3) an ihrer Unterseite eine rotationssymmetrische Ausnehmung (9) zur Justierung der Kugeln (6) aufweist, derart, dass die Ausnehmung (9) eine ebene und eine gekrümmte, z.B. konische Fläche, oder zwei konische Flächen bildet, die an einem Ring von Kugeln anliegen, die in ihrer Aufnahme eingekittet sind.

9. Havariegeschützter Mehrkoordinaten-Tastkopf nach Anspruch 1 und 4, dadurch gekennzeichnet, dass der Schwenkhebel (13) die Baueinheit (16) zur Erzeugung des Taststiftauslenksignales beaufschlagt.

10. Havariegeschützter Mehrkoordinaten-Tastkopf nach Anspruch 1 und 9, dadurch gekennzeichnet, dass die Baueinheit (16) zur Erzeugung des Taststiftauslenksignales eine lichtelektrische Messeinrichtung ist.

11. Havariegeschützter Mehrkoordinaten-Tastkopf nach Anspruch 10, dadurch gekennzeichnet, dass die lichtelektrische Messeinrichtung aus Lichtsender (17), optischem Element (18) und Empfänger (19) besteht.

12. Havariegeschützter Mehrkoordinaten-Tastkopf nach Anspruch 10 und 11, dadurch gekennzeichnet, dass der Lichtsender (17) eine Leuchtdiode, das optische Element (18) eine Linse und der Empfänger (19) ein Differential-Fotoelement ist.

13. Havariegeschützter Mehrkoordinaten-Tastkopf nach Anspruch 10 und 11, dadurch gekennzeichnet, dass das optische Element (18) aus einer als sogenannte Referenzmarke bekannten Markierung mit zugehöriger Abtastplatte besteht und der Empfänger (19) ein Fotoelement ist.

14. Havariegeschützter Mehrkoordinaten-Tastkopf nach Anspruch 1, dadurch gekennzeichnet, dass eine Alarmvorrichtung (20) vorgesehen ist, die bei Auslenkung des Taststiftes (4) über den Arbeitsbereich hinaus ein Alarmsignal auslöst.

**Claims**

1. Damage protected multi-coordinate sensing head with a sensing head housing, a sensing rod mounted in the sensing head housing, displaceable in a plurality of directions and assuming a defined zero position in its state of rest, as well as with a unit for generating a sensing rod deflection signal, characterised in that the sensing head housing (1) has a sufficiently large volume to receive the sensing rod (4), in that the sensing rod (4) is so articulated within the sensing rod housing (1) by means of a three dimensional linkage (4, 10, 11, 12, 13, 14) that the sensing rod (4) is pressed into the inner space of the sensing head housing (1) on extreme deflection.

2. Damage protected multi-coordinate sensing head according to claim 1, characterised in that at least two three dimensional links (11, 12) and a planar link (14) are provided as the linkage (4, 10, 11, 12, 13, 14), which connect together the linkage members (4, 10, 13).

3. Damage protected multi-coordinate sensing head according to claim 1 and 2, characterised in that between an input linkage member (4) and an output linkage member (13) there is arranged an intermediate member (12) with universal joints (11, 12) at both ends.

4. Damage protected multi-coordinate sensing head according to claim 1 to 3, characterised in that the input linkage member (4) is a sensing rod and the output linkage member (13) a swinging lever.

5. Damage protected multi-coordinate sensing head according to claim 1 to 4, characterised in that the sensing head housing (1) comprises an arrangement which allows the sensing rod (4) to snap into the inner space of the sensing head housing (1) – on deflection beyond the working range.

6. Damage protected multi-coordinate sensing head according to claim 1, characterised in that the sensing rod (4) can be arrested in the inner space of the sensing head housing (1).

7. Damage protected multi-coordinate sensing head according to claim 1, characterised in that the sensing rod (4) comprises a substantially round plate (3) in the interior of the sensing rod housing (1), and in that the defined zero position of the sensing ball (5) is determined in use by the positioning of the plate (3) on a ring of balls (6) at the bottom (7) of the sensing head housing (1).

8. Damage protected multi-coordinate sensing head according to claim 7, characterised in that the plate (3) comprises a circularly symmetric recess (9) in its underside for adjusting the balls (6), such that the recess (9) forms a flat surface and a curved surface, e.g. a conical surface, or two conical surfaces, which lie on a ring of balls which are cemented in their holder.

9. Damage protected multi-coordinate sensing head according to claim 1 and 4, characterised in that the swinging lever (13) acts on the unit (16) for generating the sensing rod deflection signal.

10. Damage protected multi-coordinate sensing head according to claim 1 and 9, characterised in that the unit (16) for generating the sensing rod deflection signal is a photo-electric measuring device.

11. Damage protected multi-coordinate sensing head according to claim 10, characterised in that the photo-electric measuring device consists of light emitter (17), optical element (18) and receiver (19).

12. Damage protected multi-coordinate sensing head according to claim 10 and 11, characterised in that the light emitter (17) is a photo diode, the optical element (18) is a lens and the receiver (19) is a differential photo element.

13. Damage protected multi-coordinate sensing head according to claim 10 and 11, characterised in that the optical element (18) consists of a known marking as so-called reference mark with associated sensing plate, and the receiver (19) is a photo element.

14. Damage protected multi-coordinate sensing head according to claim 1, characterised in that an alarm device (20) is provided to emit an alarm signal on deflection of the sensing rod (4) beyond the working range.

**Revendications**

1. Palpeur multi-axial protégé contre les avaries, comprenant un boîtier de palpeur, une tige de palpeur qui est logée dans le boîtier de palpeur, susceptible d'être dévié dans plusieurs directions et occupant au repos une position zéro définie, ainsi qu'un module destiné à produire un signal de déviation de la tige de palpeur, caractérisé en ce que le boîtier de palpeur (1) présente une cavité suffisamment grande pour recevoir la tige de palpeur (4), que la tige de palpeur (4) est articulée à l'intérieur du boîtier de palpeur (1) à l'aide d'un mécanisme de transmission articulé (4, 10, 11, 12, 13, 14) à mouvement dans l'espace de telle sorte que la tige de palpeur (4) soit poussée, en cas de déviation extrême, dans la cavité du boîtier de palpeur (1).

2. Palpeur multi-axial protégé contre les avaries selon la revendication 1, caractérisé en ce que le mécanisme articulé (4, 10, 11, 12, 13, 14) est constitué par au moins deux articulations (11, 12) à mobilité dans l'espace et une articulation (14) à mobilité dans un plan qui relient entre eux les éléments de transmission (4, 10, 13).

3. Palpeur multi-axial protégé contre les avaries selon les revendications 1 et 2, caractérisé en ce qu'un élément intermédiaire (10) comportant des joints de cardan (11, 12) à ses deux extrémités est disposé entre un élément de transmission d'entrée (4) et un élément de transmission de sortie (13).

4. Palpeur multi-axial protégé contre les avaries selon les revendications 1 à 3, caractérisé en ce que l'élément de transmission d'entrée (4) est une tige de palpeur et l'élément de transmission de sortie (13) un levier pivotant.

5. Palpeur multi-axial protégé contre les avaries selon les revendications 1 à 4, caractérisé en ce que le boîtier de palpeur (1) présente un dispositif qui fait brusquement passer la tige de palpeur (4) dans la cavité du boîtier de palpeur (1) en cas de déviation au-delà de la zone de travail.

6. Palpeur multi-axial protégé contre les avaries selon la revendication 1, caractérisé en ce que la tige de palpeur (4) peut être bloquée dans la cavité du boîtier de palpeur (1).

7. Palpeur multi-axial protégé contre les avaries selon la revendication 1, caractérisé en ce que la tige de palpeur (4) présente, à l'intérieur du boîtier de palpeur (1), une plaque (3) pour l'essentiel ronde et en ce que la position zéro définie de la sphère de palpeur (5) est déterminée en service par la position de la plaque (3) par rapport à une rangée de billes (6) sur le fond (7) du boîtier de palpeur (1).

8. Palpeur multi-axial protégé contre les avaries selon la revendication 7, caractérisé en ce que la plaque (3) présente sur sa face intérieure un creux (9) à symétrie de révolution destiné à ajuster les billes (6) de telle sorte que le creux (9) forme une surface plane et une surface courbe, conique, par exemple, ou deux surfaces coniques qui reposent sur une rangée de billes qui sont cimentées dans leur support.

9. Palpeur multi-axial protégé contre les avaries selon les revendications 1 à 4, caractérisé en ce que le levier pivotant (13) agit sur le module (16) destiné à produire le signal de déviation de la tige de palpeur.

10. Palpeur multi-axial protégé contre les avaries selon les revendications 1 et 9, caractérisé en ce que le module (16) destiné à produire le signal de déviation de la tige de palpeur est un dispositif photoélectrique de mesure.

11. Palpeur multi-axial protégé contre les avaries selon la revendication 10, caractérisé en ce que le dispositif photoélectrique de mesure est composé d'un émetteur de lumière (17), d'un élément optique (18) et d'un récepteur (19).

12. Palpeur multi-axial protégé contre les avaries selon les revendications 10 et 11, caractérisé en ce que l'émetteur de lumière (17) est une diode luminescente, l'élément optique (18) une lentille et le récepteur (19) une cellule photoélectrique différentielle.

13. Palpeur multi-axial protégé contre les avaries selon les revendications 10 et 11, caractérisé en ce que l'élément optique (18) est composé d'un marquage connu sous le nom de marque de référence avec une plaque d'exploration correspondante et en ce que le récepteur (19) est une cellule photoélectrique.

14. Palpeur multi-axial protégé contre les avaries selon la revendication 1, caractérisé en ce qu'il est prévu un dispositif d'alarme (20) qui, en cas de déviation de la tige de palpeur (4) au-delà de la zone de travail, déclenche un signal d'alarme.

Fig.1

Fig. 2

# Fig. 3

# Fig. 4